# EUROPEAN PATENT APPLICATION

(11) **EP 4 524 820 A1**
(43) Date of publication of application: **19.03.2025**
(21) Application number: 23275132.1
(22) Date of filing: 13.09.2023
(51) Int. Cl.: G06N 3/092, G06N 3/086, G06N 3/0985, G06N 3/045

(54) **GENERATING POLICY NEURAL NETWORKS FOR DETERMINING AGENT ACTIONS**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A computer-implemented method of generating one or more policy neural networks for use in determining actions to be taken by a plurality of vehicles, comprises generating a plurality of candidate policy neural networks by evolving a population of candidate policy neural networks using an evolutionary algorithm. The plurality of candidate policy neural networks are evaluated using a fitness function. The method further comprises selecting one or more of the plurality of candidate policy neural networks based on the evaluations, wherein the fitness function is based on an episode reward and a novelty metric, and wherein for a given candidate policy neural network, the episode reward is determined based on a virtual episode in a virtual environment.

## Description

### FIELD

The present invention relates to generating policy neural networks for use in determining actions to be taken by agents, e.g. aircraft or other vehicles.

### BACKGROUND

Reinforcement learning (RL) can be used to enable an agent to progressively learn an optimal (or near optimal) policy by interacting with a complex environment. RL is usually employed for sequential decision problems, that is, environments which require an agent to make a chain of decisions over many discrete time steps. An agent's aim is to maximise the sum of all the rewards it receives over a whole episode.

Many popular deep RL methods use backpropagation, a stochastic gradient descent method, to modify the weights of a NN to produce a successful policy, however these can require large computational resource use. Moreover, extending RL to multiple agents (MARL) gives rise to a number of challenges.

### SUMMARY

According to a first aspect of the present invention, there is provided a computer-implemented method of generating one or more policy neural networks for use in determining actions to be taken by a plurality of vehicles. The method comprises generating a plurality of candidate policy neural networks, comprising evolving a population of candidate policy neural networks using an evolutionary algorithm, wherein each of the plurality of candidate policy neural networks is evaluated using a fitness function, and selecting one or more of the plurality of candidate policy neural networks based on the evaluations. The fitness function is based on an episode reward and a novelty metric. For a given candidate policy neural network, the episode reward is determined based on a virtual episode in a virtual environment. The virtual episode comprises a number of time steps. At each time step: an input is received at the given candidate policy neural network, the input comprising data for one or more observations of the virtual environment, and an output is generated using the given candidate policy neural network. The output comprises an indication of an action to be taken by one of the plurality of vehicles. The action is then performed in the virtual environment.

At each time step, an output may be generated for each of the plurality of vehicles. Each output may comprise an indication of an action to be taken by the respective vehicle. The actions may be performed in the virtual environment by the plurality of vehicles.

The given candidate policy neural network may be used to generate the output for each vehicle by processing respective inputs for each vehicle, using the given candidate policy neural network. The respective input for each vehicle may comprise data for an observation of the virtual environment by or for the vehicle.

Thus, in some implementations, the virtual episode comprises a number of time steps, wherein at each time step, an input is received for each of the plurality of vehicles, the input comprising data for an observation of the virtual environment by or for the vehicle. An output for each vehicle is generated using the same candidate policy neural network (i.e. using the given candidate policy neural network). The generated outputs indicate actions to be taken by the plurality of vehicles for the time-step. These actions are performed in the virtual environment by the plurality of vehicles.

According to a second aspect of the present invention, there is provided a method comprising: generating a policy neural network in accordance with the computer-implemented method of the first aspect; receiving, at the policy neural network, an input comprising data for one or more real-world observations in a real-world environment; generating, using the policy neural network, an output comprising an indication of an action to be performed in the real-world environment by one of the plurality of vehicles, and performing the action by the vehicle in the real-world environment.

In some examples, an output may be generated for each of the plurality of vehicles. Each output may comprise an indication of an action to be performed in the real-word environment by the vehicle. The policy neural network may be used to generate the output for each vehicle by processing respective inputs for each vehicle, wherein each input comprises a real-world observation by or for the respective vehicle.

Thus, in some examples, the method according to the second aspect comprises receiving, at the policy neural network, an input for each of the plurality of vehicles, the input comprising data for a real-world observation by or for the vehicle. An output is generated for each of the plurality of vehicles by processing the respective input using the policy neural network. For each vehicle, the output comprises an indication of an action to be performed by the vehicle. The method may further comprise performing the actions by the vehicles in the real-world environment.

The novelty metric for an episode may be determined by comparing an encoded representation of a state of the virtual environment after the virtual episode with one or more stored encoded representations of the state of the virtual environment after one or more other virtual episodes.

In some examples the novelty metric for an episode may be determined by comparing an encoded representation of a state of the virtual environment during the virtual episode with one or more stored encoded representations of the state of the virtual environment during the one or more other virtual episodes.

The encoded representations may each comprise data points in a metric space. The novelty metric may comprise the mean of the distances between the data point for the encoded representation of the state of the virtual environment after (or during) the virtual episode and the data points for the stored encoded representations after (or during)_the one or more other virtual episodes.

Each of the one or more observations of the virtual environment may include state data for the vehicle, and state data for any other of the plurality of vehicles within view.

The virtual environment may comprise a plurality of cells. The data for the one or more observations of the virtual environment may comprise state data for a subset of the plurality of cells, the subset being determined based at least in part on the observational capability of said one of the plurality of vehicles. The subset may be a proper subset of the plurality of cells to reflect partial observability from the perspective of said one of the plurality of vehicles.

The data for the one or more observations of the virtual environment may comprise a union of observation data for said one of the plurality of vehicles and observation data for one or more other of the plurality of vehicles within a communication cluster, wherein the vehicles within a communication cluster are determined based on distances between the vehicles in the virtual environment.

The plurality of vehicles may comprise a plurality of aircraft.

In some examples, at least two of the plurality of candidate policy neural networks may be evaluated in parallel. The at least two candidate policy neural networks may be evaluated on two respective processing devices.

Other aspects of the invention provide an apparatus or system such as a mission planning system or a control system (e.g. vehicle control systems) configured to perform any of the computer-implemented methods described herein, as well as a vehicle such as an aircraft comprising such a system or apparatus.

### BRIEF DESCRIPTION OF THE FIGURES

Embodiments of the invention will now be described by way of example only with reference to the figures, in which:
Figure 1 is a high-level overview of a system for generating one or more policy neural networks for use in determining actions to be taken by a plurality of agents;
Figure 2 shows an example of a candidate policy neural network;
Figure 3(a) shows a virtual environment;
Figure 3(b) shows an agent's observation of the virtual environment;
Figure 4 illustrates an evolutionary cycle;
Figure 5(a) illustrates how the parameters of a neural network may be encoded into genes to form a chromosome;
Figure 5(b) shows a many-to-one mapping of genotype to phenotype;
Figure 6 shows an example process to determine the population of a next generation;
Figure 7 shows a breed/crossover method;
Figure 8(a), 8(b) and 8(c) show example scenarios in which a plurality of agents cooperate to achieve a goal;
Figure 9 shows a distance calculation between encoded representations of the state of an environment at the end of two different episodes;
Figure 10(a) shows an example method for generating one or more candidate policy neural networks for use in determining actions to be performed by an agent, and
Figure 10(b) shows steps performed during a step of a virtual episode;
Figure 11 shows a schematic overview of a computer system/apparatus for performing any of the methods described herein

### DETAILED DESCRIPTION

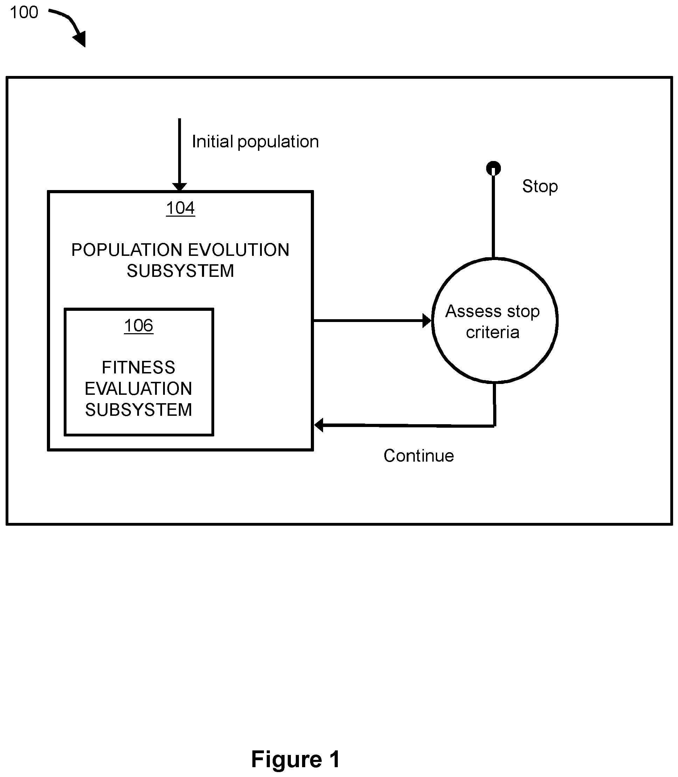

Figure 1 is a high-level overview of a system 100 for generating one or more policy neural networks for use in determining actions to be taken by a plurality of agents in accordance with an example implementation of the technology described in this specification. The system 100 evolves behaviour policies to allow the agents to coordinate to complete a mission, for example against a fixed behaviour adversary. Each agent may for example comprise an aircraft or other vehicle. The system 100 may be included in mission planning system or in a vehicle control system, as discussed in more detail below.

The system 100 is configured to adapt a population of candidate policy neural networks using an evolutionary algorithm. A population evolution subsystem 104 is configured to receive an initial population of candidate policy neural networks and to iteratively produce an adapted population over a number of generations. The population evolution subsystem 104 includes a fitness evaluation subsystem 106 configured to evaluate the fitness of candidate policy neural networks using a fitness function and to keep track of the "best" candidates. At each iteration, the system 100 determines whether one or more stop criteria have been met, e.g. whether a 'good enough' candidate has been found, or a maximum number of generations has been reached.

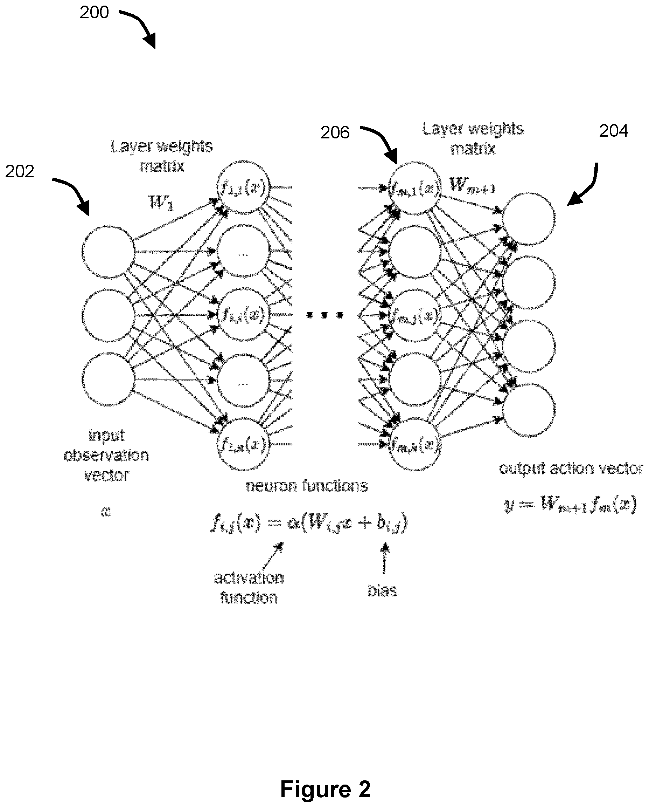

Figure 2 shows an example of a candidate policy neural network 200. As shown, the neural network is configured to receive an input observation vector for an observation by an agent (e.g. a vehicle such as an aircraft) at its input layer 202 and to output an action vector for the agent at its output layer 204. The neural network 200 further comprises a number of hidden layers, each of which includes a number of neurons 206. As shown, each neuron *f*_{i,j} produces an output in accordance with the expression:

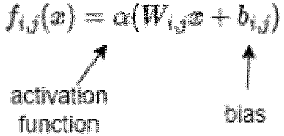

Here, W_{i,j} are the weights of the neural network 200, b_{i,j} are the biases, and α is the activation function. The activation function may for example by a hyperbolic tangent (tanh) activation function of a rectified-linear-unit (ReLU) activation function. The weights W_{i,j} and biases b_{i,j} together form the parameters of the neural network. In some examples, the parameters of the neural network may be varied by the population evolution subsystem 104 as new generations are produced, while the architecture is user-specified and remains fixed (i.e. not varied during the population evolution process). However, in other examples both the parameters and/or the hyperparameters which define the architecture (e.g. the number of layers in the neural network 200, the number of nodes in each layer etc) may be varied as new generations are produced by the population evolution subsystem 104.

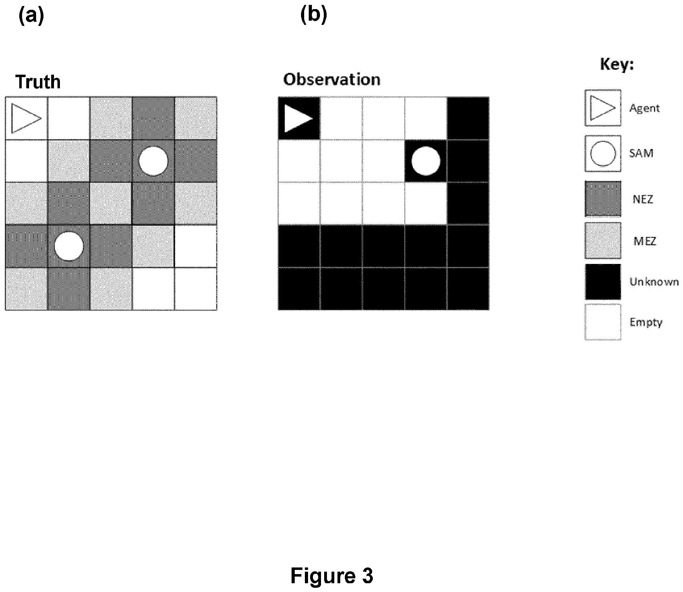

The input observation vector for an agent may encode a current state of the elements of a virtual environment which can be observed by the agent. For example, the virtual environment may comprise an n x m grid, with zero or one object per cell, as shown in Figure 3(a). Figure 3(b) illustrates the agent's observation for one example scenario in which the agent has a sensor capable of viewing three cells forward and two cells lateral. Numerically, the observation may be encoded as an n × m × p array, for any value of p depending on the resolution of the agent observation. For example, the observation may be encoded as an n × m × 3 array, with each cell represented by 3 integers as described by Table 1 below:

**Table 1**

| Object type | Encoding |
|---|---|
| agent (self) | [1, heading/90, {initial weaponcount +1 *(if jamming),* current weaponcount (*if not jamming)*}] |
| agent (other) | [2, heading/90, {initial weaponcount +1 *(if jamming*), current weaponcount (*if not jamming*)}] |
| Empty | [3,0,0] |
| Unseen | [4,0,0] |
| Goal | [5,0,0] |
| Surface-to-air-missile (SAM) | [6, weaponcount, {0 (*if terminated),* 1 (*is jammed*), 2 *(otherwise)*}] |

The n × m × 3 matrix for the agent's observation may then be vectorised to form the input observation vector.

The action vector output by the neural network 200 may indicate a code for an action. For example, the action vector output may be a code for one of the following actions:
- Forward: move to the adjacent cell in the direction of the agent's heading
- Right: rotate 90° clockwise
- Left: rotate 90° anticlockwise
- Shoot nearest target. "Nearest" may be determined firstly by Manhattan distance to the object, and secondly by angular displacement off the agent's heading
- Jam nearest target. "Nearest" may be determined as for shooting. If a SAM is jammed, it cannot release any missiles for that iteration.

In various implementations, the population evolution subsystem 104 implements a neuroevolution approach to evolve a current population of candidate policy neural networks to iteratively produce adapted populations of candidate policy neural networks. Neuroevolution (NE) is a known term which encompasses a range of techniques that use evolutionary algorithms to produce trained neural networks. Evolutionary algorithms are generally populated-based optimisers in which a set of potential solutions are iteratively stochastically varied and/or possibly combined, to produce new potential solutions, analogous to evolution in the natural world. NE is widely considered to be an alternative paradigm for producing training neural networks compared to the more conventional approach of training using stochastic gradient descent and backpropagation.

In various implementations, the population evolution subsystem makes use of a genetic algorithm to implement NE by evolving a population of candidate solutions over a search process, until the set of one or more stop criteria are met. Such criterion may comprise one or more of the following: a 'good enough" candidate is found, a maximum number of generations has been reached, or there is sustained failure across generations to make improvement. As will be appreciated by those skilled in the art, such criteria may be evaluated by way of predefined numerical thresholds which may be tested at each iteration, as shown in Figure 1. As they are population based, genetic algorithms are highly parallelisable, i.e. they can be readily distributed across multiple processing devices. For example, at least two candidate policy neural networks may be evaluated on two respective processing devices.

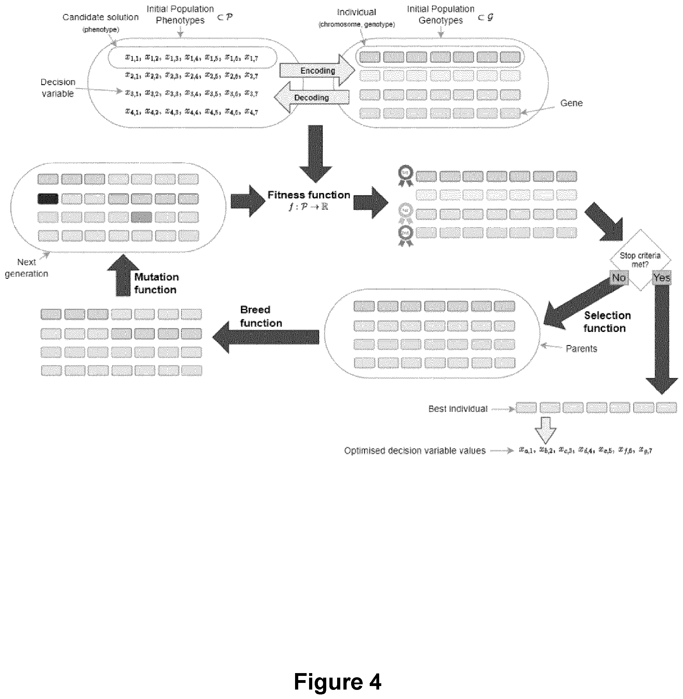

The evolution may be carried out through a number of functions, e.g. selection, breeding (often called crossover) and/or mutation. Figure 4 illustrates one example of how these operations may fit together to form an evolutionary cycle. "Selection" choose "strong" individuals to be the parents for the next generation. "Breed" combines pairs of these parents to produce offspring, and "mutation" applies random mutations to the offspring. The fitness of these offspring are then evaluated using the fitness function, and the cycle repeats. It will be understood that each "individual" refers to a candidate policy neural network in the current population.

As is known in the art, in a genetic algorithm, domain-specific candidate solutions (sometimes referred to as "phenotypes") may be each encoded into a series of domain-agnostic artificial genes which together make an artificial chromosome: each decision variable of the optimisation problem corresponds to a gene. The evolutionary algorithm acts upon a set of chromosomes (sometimes referred to as individuals, or genotypes). Once a single chromosome is selected by the algorithm, it is then decoded back into a domain solution.

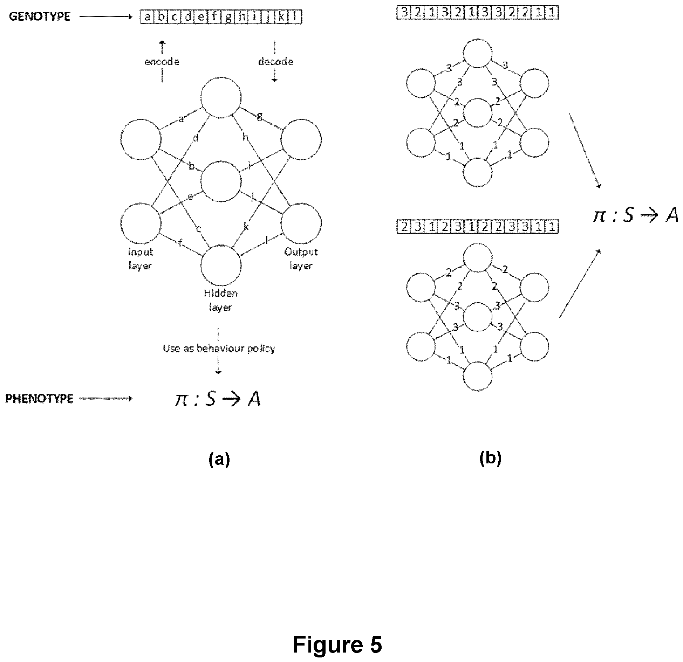

In neuroevolution, the parameters and/or the architecture of a neural network are encoded into genes to form a chromosome. In some examples, the parameters of the neural network 200 are varied by the population evolution subsystem 104, while the architecture of the neural network remains fixed. In this case, a suitable encoding may comprise a simple concatenation of genes for each weight as illustrated in Figure 5(a). Those skilled in the art will appreciate that more complex encoding may alternatively be used, for example to encode both the parameters and the architecture of the neural network 200.

Note that while Figure 5(a) shows a 1-1 mapping between weights/biases and genes, in some examples there may be multiple genotypes which map to the same phenotype. This is illustrated in Figure 5(b), which shows a many-to-one mapping of genotype to phenotype; if two hidden neurons (without biases) and their weights are swapped in the structure it was no functional effect on the behaviour of the network.

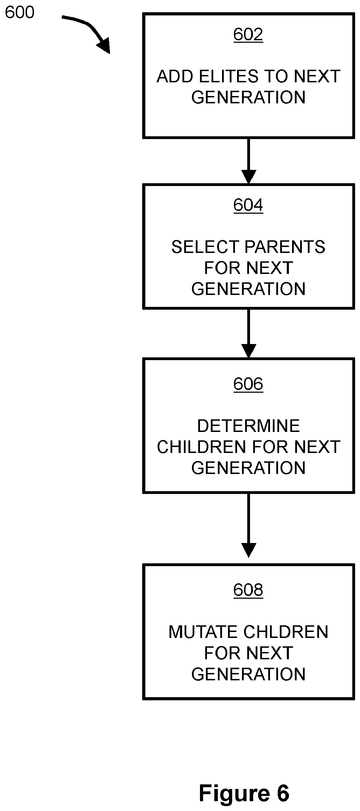

Figure 6 illustrates an example process 600 which may be performed by the population evolution subsystem 104 at each iteration to determine the population of the next generation.

The process 600 may form part of the typical cycle illustrated in Figure 4, but with the addition of "elitism", i.e. the "best" individuals, as determined by the fitness function, are preserved between generations without mutation (step 602).

As shown in step 604, the population evolution subsystem 104 also selects the parents for the next generation. This can be done by evaluating the fitness of each individual in the current population using the fitness function and selecting, with replacement, a number of individuals to be put forward as parents for the next generation. Various selections functions which can be used for this purpose are known *per se* to those skilled in the art. For example, the selection function may for example be a 'truncation selection', whereby parents are randomly selected with replacement from the top n individuals as determined by the fitness function. Other selection functions include: "tournament selection", which involves several rounds of 'tournaments' in which n individuals are selected at random (with or without replacement) from the current population and the top m within that tournament are selected as parents, and "fitness proportion selection" in which an individual's probability of selection is proportional to its fitness (as determined by the fitness function).

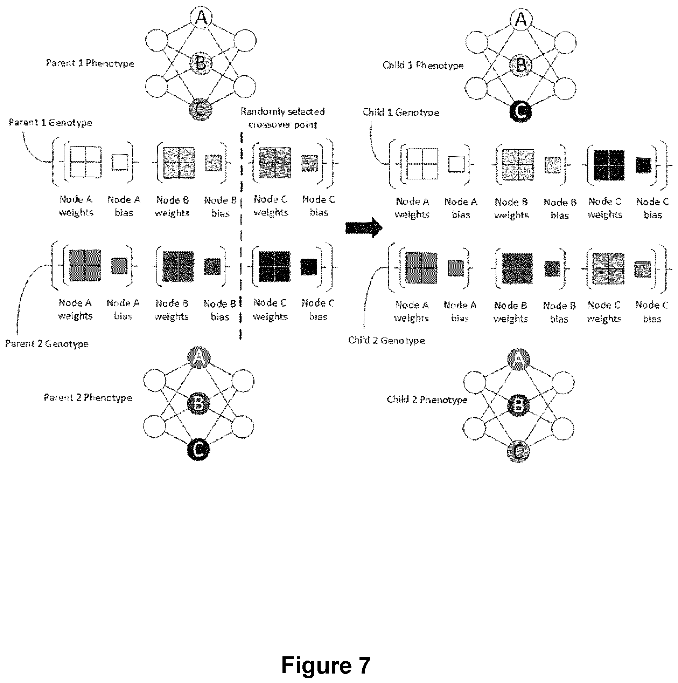

In step 606, the population evolution subsystem 104 determines the children for the next generation. One way to determine this is to have each parent clone itself into the next population. Alternatively, a breed/crossover function may be implemented by selecting a neuron at random as the crossover point, thereby ensuring that weights and biases for each neuron are preserved together. This is shown in Figure 7.

In step 608, the population evolution subsystem 104 mutates the children for the next generation. Referring back to Figure 2, a weight w may be mutated simply by reinitialising it as a random value selected from a distribution (unbiased mutation), i.e. m(w) =d, or alternatively the mutation may be biased by the existing value of the weight, i.e. m(w) = w + d. In one example implementation, weights to mutate may be selected on a node-by-node basis rather than a weight-by-weight basis. That is, n nodes may be randomly selected for mutation and all of their associated weights may be mutated. In some example the biases b_{i,j} may also be mutated in a similar way to the weights W_{i,j}, such that weights W_{i,j} and biases b_{i,j} are mutated independently.

In general, the techniques described in this specification aim to generate an optimal policy neural network for a particular scenario. In order to test the fitness of a given candidate policy neural network, an "episode" may be executed in which agents play out the scenario by interacting with a virtual environment over a number of time steps. At each time step, the action taken by an agent is determined based on its observation using the candidate policy neural network. The fitness function may evaluate the fitness of a given candidate policy neural network using an episode reward and a novelty metric; these components of the fitness function are described in more detail below.

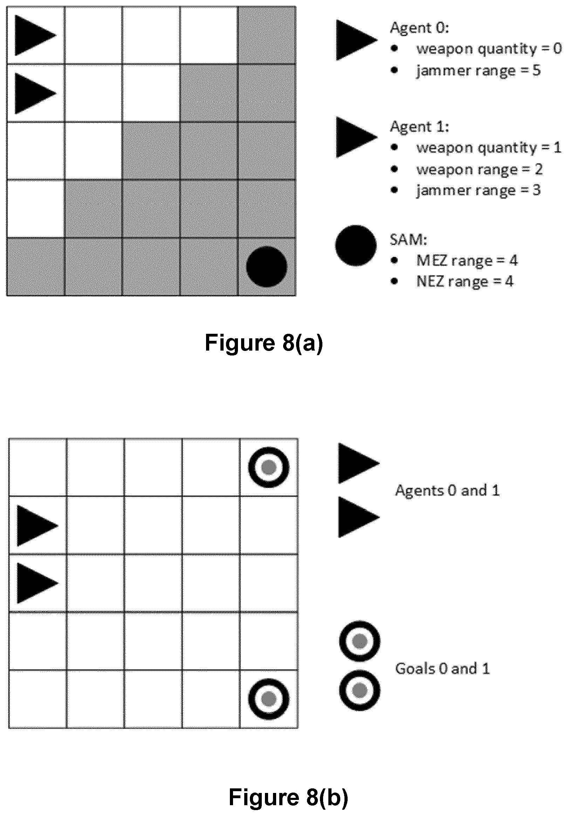

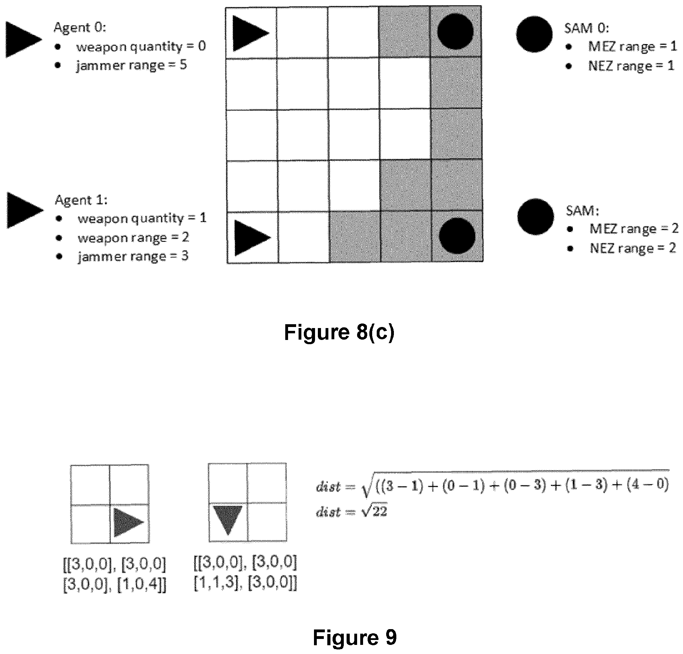

Three example scenarios are illustrated in Figures 8(a), 8(b) and 8(c) respectively. In each scenario, a plurality of agents cooperate to complete a particular mission. It will be appreciated that the illustrated scenarios are merely examples and that many other scenarios are possible, e.g. involving more than two agents, different grid sizes, different objectives etc.

Figure 8(a) illustrates an example scenario requiring cooperation between two heterogeneous agents. As shown, the scenario includes one surface-to-air missile (SAM) and the goal of the scenario is to eliminate the SAM. Only one of the agents has weapons, but both agents have the ability to jam the SAM, rendering it temporarily unable to shoot at any agent in its "No Escape Zone" (NEZ). If an agent enters the NEZ of the SAM, the agent is terminated immediately. The SAM also has a Missile Engagement Zone (MEZ). If an agent enters the MEZ, it is given a fixed number of steps (`loiter count') to leave it before it is terminated. The SAM's missile quantity is decremented every time an agent enters its MEZ. The scenario has no stochastic elements.

The scenario is associated with a reward function, whereby a reward is only signalled at the end of an episode or when an agent is terminated. Thus, the reward function is sparse. If the SAM is shot, the reward is +1, if an agent is killed, the reward is -1. The episode ends when either the SAM is killed or both agents are killed, or a predefined number (e.g. 15) iterations have passed.

For a given candidate policy neural network, an episode reward can be determined by deploying the candidate policy neural network as the policy neural network of both agents in the scenario. That is, at each of a plurality of time steps, the action of each agent is determined by inputting the observation of the agent into the candidate policy neural network; the output of the candidate policy neural network then determines the action to be taken by the agent for the time step. The candidate policy neural network for each agent remains unchanged through the scenario.

Figure 8(b) illustrates a scenario requiring cooperation between two heterogeneous agents. The goal of the scenario is for the two agents to occupy the two goal cells (it does not matter which goes to which). The reward function is again sparse, with +1 signalled the first time a goal is occupied. The episode ends when both goals are occupied, or 15 iterations have passed. Again, the scenario has no stochastic elements.

Figure 8(c) illustrates a scenario requiring cooperation between two homogeneous agents. The goal of the scenario is to destroy both SAMs. The reward function is the same as the scenario described above with reference to Figure 8(a). However, in this case, there is no jamming and no travel into a NEZ is required.

Irrespective of the scenario, the candidate policy neural network under test may be deployed as the policy neural network for each agent in the scenario. An episode is executed and the reward is calculated to determine the episode reward component of the fitness function. In the case of a stochastic environment, multiple episodes may be executed, and the rewards summed or averaged.

It should be noted that as described above in relation to Figure 3, each observation by an agent includes a reference to its own state, and the positional state of any cooperating agent within view or within communication range. This allows for agent heterogeneity whilst sharing the same policy since the internal state of an agent is included in the policy input.

Communication between agents may be modelled by giving each agent a (possibly different) communication range such that agents can communicate with each other agent in the same cluster (possibly using multi-hops via another agent in the cluster). An agent then adds the sensed observations of each other agent in its cluster to its own sensed observation and this union of sensory inputs becomes the agent's observation for that iteration.

Although one of the key advantages to using a genetic search is its ability to widely explore the search space and combat early convergence, if the hyperparameters are not tuned correctly, the selection, mutation or crossover functions are inappropriate, or the fitness function is slightly misaligned, there is still a risk of getting "stuck" in a local minimum. Even a well-aligned fitness function may be inherently 'deceptive'; local-minima may still be promising enough to lead the search astray, or local-maxima may be concealing a promising route. Once a promising route is identified by the search, the selection and breeding functions may over-enthusiastically produce individuals in that single part of the search space. This is a symptom of treating it purely as an optimisation problem, instead of seeking diversity.

In various implementations described herein, this problem is addressed by including a novelty metric component in the fitness function to reward novel behaviours.

The novelty metric component of the fitness function may be determined based on the state of the virtual environment at the end of the episode. For example, the state of the environment at the end of the episode may be compared to the state of the environment at the end of one or more other virtual episodes which were executed previously.

More specifically, the state of the environment at the end of an episode may be encoded as a n × m × p dimensional datum (where m and n are the width and height of the grid), where each cell is represented by p integers, for example as described in table 1 above. A distance between two end states may be determined as the Euclidean distance between the two flattened vectors, as illustrated in Figure 9.

One example novelty metric is the mean distance between the encoded representation of the state of the virtual environment at the end of the episode and the N nearest encoded representations that are stored in the archive. A nearest-neighbour algorithm may be used to determine the N nearest encoded representations in the archive.

The encoded representation of the state of the virtual environment at the end of the episode may then be added to the archive.

Thus, an example fitness function may be given by f = r + k *M, where r is the episode reward, M is the mean distance between the encoded representation of the state of the virtual environment at the end of the episode and the N nearest encoded representations that are stored in the archive, and k is a constant (e.g. 0.0001).

Many variations to the examples described above are possible. For example, although the same policy may be shared between agents, as described above, in alternative implementations a plurality of different policy neural networks may be generated and assigned to different agents. Moreover although the scenarios shown in Figures 8(a), 8(b) and 8(c) have no stochastic elements, in other scenarios stochasticity may be introduced in various ways, for example by allowing a SAM to be at one of a number of different locations, each selected with equal probability.

The system 100 may be employed in various contexts. For example, the system 100 may be used as part of a mission planning system to plan for particular scenarios. Alternatively, the system 100 may used in an onboard autonomy function, or in a centralised system which remotely controls one or a plurality of vehicles.

In some embodiments, the system 100 may be used to generate a policy neural network for controlling one or more vehicles in a real-world environment. For example, a policy neural network generated by the system 100 may be stored in the memory of a vehicle control system. The vehicle may for example be an autonomous or semi-autonomous vehicle. The policy neural network may receive an input comprising data for one or more real-world observations in the real-world environment, and may generate an output comprising an indication of an action to be performed in the real-world environment by a vehicle. The real-world observations may for example comprise sensing data generated by one or more sensors, e.g. one or more sensors of a vehicle.

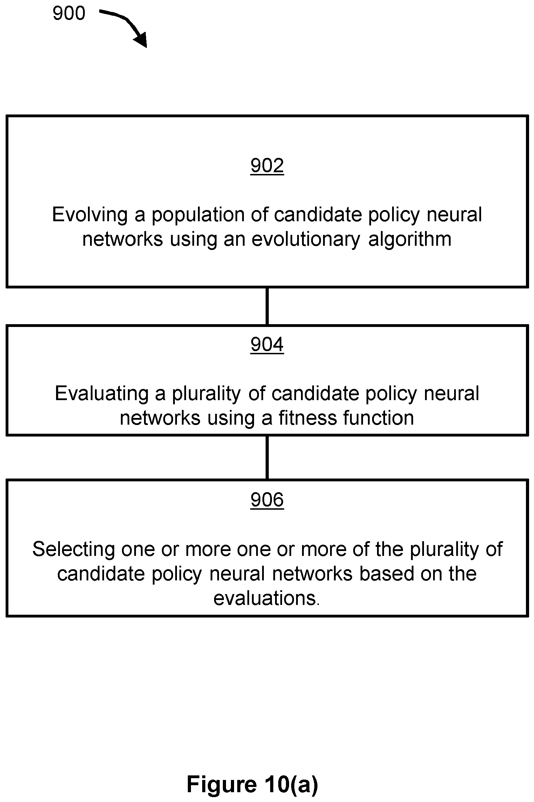

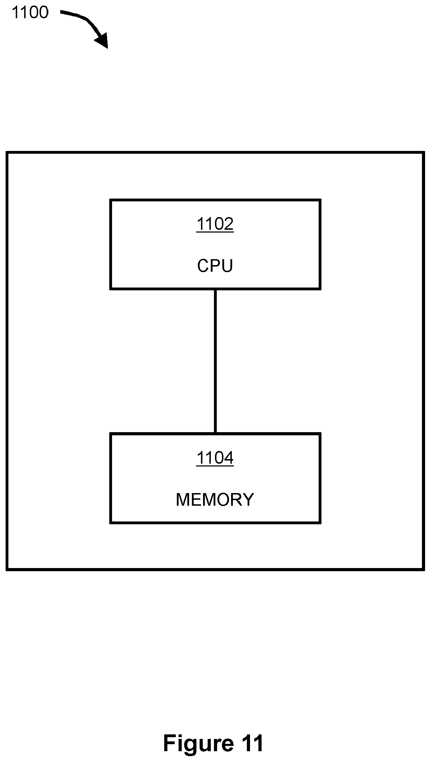

Figure 10(a) shows a flow diagram of an example method 900 of generating one or more policy neural networks for use in determining actions to be taken by a plurality of vehicles. The method may be performed by a computing apparatus, such as the system described in relation to Figure 11.

At operation 902, a plurality of candidate policy neural networks are generated by evolving a population of policy neural networks using an evolutionary algorithm. At operation 904, each of the plurality of candidate policy neural networks is evaluated using a fitness function. At operation 906, one or more of the plurality of candidate policy neural networks are selected based on the evaluations.

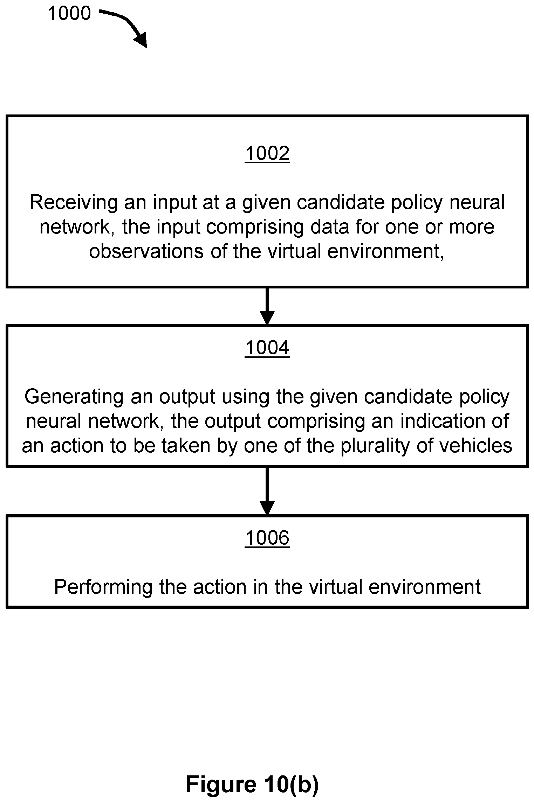

The fitness function is based on an episode reward and a novelty metric. For a given candidate policy neural network, the episode reward is determined based on a virtual episode in a virtual environment. To determine the episode reward, the candidate policy neural network under test is deployed as the policy network for one or more agents (i.e. vehicles) that interact with the virtual environment, and the episode is executed. Figure 10(b) shows a flow diagram of processing steps which occur at each time step of the virtual episode. At step 1002, an input is received at the candidate policy neural network that is being evaluated. The input comprises data for one or more observations of the virtual environment by an agent. At step 1004, an output is generated using the given candidate policy neural network, the output comprising an indication of an action to be taken by one of the plurality of vehicles. At step 1006, the action is performed in the virtual environment.

Figure 11 shows a schematic overview of an computer system/apparatus 1100 for performing any of the methods described herein. The system/apparatus 1100 may be a distributed system.

The apparatus (or system) 1100 comprises one or more processors 1102. The one or more processors control operation of other components of the system/apparatus 1100. The one or more processors 1102 may, for example, comprise a general-purpose processor. The one or more processors 1102 may be a single core device or a multiple core device. The one or more processors 1102 may comprise a Central Processing Unit (CPU) or a graphical processing unit (GPU). Alternatively, the one or more processors 1102 may comprise specialised processing hardware, for instance a RISC processor or programmable hardware with embedded firmware. Multiple processors may be included.

The system/apparatus comprises a memory 1104. The memory 1104 may comprise a working or volatile memory. The one or more processors may access the volatile memory in order to process data and may control the storage of data in memory. The volatile memory may comprise RAM of any type, for example Static RAM (SRAM), Dynamic RAM (DRAM), or it may comprise Flash memory, such as an SD-Card.

The memory 1104 may further comprise a non-volatile memory. The non-volatile memory stores a set of operation instructions for controlling the operation of the processors 1102 in the form of computer readable instructions. The non-volatile memory may be a memory of any kind such as a Read Only Memory (ROM), a Flash memory or a magnetic drive memory.

The one or more processors 1102 are configured to execute operating instructions to cause the system/apparatus to perform any of the methods described herein. The operating instructions may comprise code (i.e. drivers) relating to the hardware components of the system/apparatus 1100, as well as code relating to the basic operation of the system/apparatus 1100. Generally speaking, the one or more processors 1102 execute one or more instructions of the operating instructions, which are stored permanently or semi-permanently in the non-volatile memory, using the volatile memory to store temporarily data generated during execution of said operating instructions.

Implementations of the methods described herein may be realised as in digital electronic circuitry, integrated circuitry, specially designed ASICs (application specific integrated circuits), computer hardware, firmware, software, and/or combinations thereof. These may include computer program products (such as software stored on e.g. magnetic discs, optical disks, memory, Programmable Logic Devices) comprising computer readable instructions that, when executed by a computer, such as that described in relation to Figure 6, cause the computer to perform one or more of the methods described herein.

Any system feature as described herein may also be provided as a method feature, and vice versa. As used herein, means plus function features may be expressed alternatively in terms of their corresponding structure. In particular, method aspects may be applied to system aspects, and vice versa.

Furthermore, any, some and/or all features in one aspect can be applied to any, some and/or all features in any other aspect, in any appropriate combination. It should also be appreciated that particular combinations of the various features described and defined in any aspects of the invention can be implemented and/or supplied and/or used independently.

Although several embodiments have been shown and described, it would be appreciated by those skilled in the art that changes may be made in these embodiments without departing from the principles of this disclosure, the scope of which is defined in the claims.

## Claims

1. A computer-implemented method of generating one or more policy neural networks for use in determining actions to be taken by a plurality of vehicles, comprising:
generating a plurality of candidate policy neural networks, comprising evolving a population of candidate policy neural networks using an evolutionary algorithm, wherein each of the plurality of candidate policy neural networks is evaluated using a fitness function, and
selecting one or more of the plurality of candidate policy neural networks based on the evaluations,
wherein the fitness function is based on an episode reward and a novelty metric, and wherein for a given candidate policy neural network, the episode reward is determined based on a virtual episode in a virtual environment, the virtual episode comprising a number of time steps, wherein at each time step:
an input is received at the given candidate policy neural network, the input comprising data for one or more observations of the virtual environment,
an output is generated using the given candidate policy neural network, the output comprising an indication of an action to be taken by one of the plurality of vehicles, and
the action is performed in the virtual environment.

2. A method comprising:
generating one or more policy neural networks for use in determining actions to be taken by a plurality of vehicles in accordance with the method of claim 1;
receiving, at one of said policy neural networks, an input comprising data for one or more real-world observations in a real-world environment;
generating, using the policy neural network, an output comprising an indication of an action to be performed in the real-world environment by one of the plurality of vehicles, and
performing the action by the vehicle in the real-world environment.

3. The method of claim 1 or claim 2, wherein the novelty metric for an episode is determined by comparing an encoded representation of a state of the virtual environment after the virtual episode with one or more stored encoded representations of the state of the virtual environment after one or more other virtual episodes.

4. The method of claim 3, wherein:
the encoded representations each comprise data points in a metric space,
the novelty metric comprises the mean of the distances between the data point for the encoded representation of the state of the virtual environment after the virtual episode and the data points for the stored encoded representations after the one or more other virtual episodes.

5. The method of any one of the preceding claims, wherein each of the one or more observations of the virtual environment includes state data for the vehicle, and state data for any other of the plurality of vehicles within view.

6. The method of any one of the preceding claims, wherein the virtual environment comprises a plurality of cells, and wherein the data for the one or more observations of the virtual environment comprises state data for a subset of the plurality of cells, the subset being determined based at least in part on the observational capability of said one of the plurality of vehicles.

7. The method of any one of the preceding claim, wherein the subset is a proper subset of the plurality of cells to reflect partial observability from the perspective of said one of the plurality of vehicles.

8. The method of any one of the preceding claims, wherein the data for the one or more observations of the virtual environment comprises a union of observation data for said one of the plurality of vehicles and observation data for one or more other of the plurality of vehicles within a communication cluster, wherein the vehicles within a communication cluster are determined based on distances between the vehicles in the virtual environment.

9. The method of any one of the preceding claims, wherein the plurality of vehicles comprise a plurality of aircraft.

10. The method of any one of the preceding claims, wherein at least two of the plurality of candidate policy neural networks are evaluated in parallel.

11. The method of claim 10, wherein the at least two candidate policy neural networks are evaluated on two respective processing devices.

12. A system comprising a data processing apparatus and one or more memories storing instructions, which when executed by the data processing apparatus cause the method of any one of the preceding claims to be performed.

13. A mission planning or control system comprising the system of claim 12.

14. A vehicle control system comprising the system of claim 12, wherein the method further comprises:
receiving, at one of said policy neural networks, an input comprising data for one or more real-world observations in a real-world environment, and
generating, using the policy neural network, an output comprising an indication of an action to be performed in the real-world environment by the vehicle.

15. A vehicle comprising the vehicle control system of claim 14.
